# EUROPÄISCHE PATENTSCHRIFT

(11) **EP 1 760 329 B1**
(45) Veröffentlichungstag und Bekanntmachung des Hinweises auf die Patenterteilung: **20.03.2013**
(21) Anmeldenummer: 06118635.9
(22) Anmeldetag: 09.08.2006
(51) Int. Cl.: F16B 13/00

(54) **Befestigungselement für harte Untergründe**
Fastening part for hard substrates
Élément de fixation pour des sous-sol durs

(30) Priorität: 02.09.2005 DE 102005000108
(43) Veröffentlichungstag der Anmeldung: 07.03.2007
(73) Patentinhaber: HILTI Aktiengesellschaft, 9494 Schaan (LI)
(72) Erfinder: Gahler, Manfred, 86343, Königsbrunn (DE); Glogger, Josef, 86807, Buchloe (DE); Huber, Franz, 86865, Markt Wald (DE); Martin, Volker, 6800, Feldkirch (AT); Radl, Michael, 6845, Hohenems (AT); Wieser, Jürgen, 86916, Kaufering (DE)
(74) Vertreter: Wildi, Roland

(56) Entgegenhaltungen:
- EP-A2- 1 455 098
- EP-A2- 1 536 149
- WO-A1-01/88387
- US-A- 2 742 074
- US-A- 5 630 688

## Beschreibung

### Technisches Gebiet

Die Erfindung betrifft ein Befestigungselement für harte Untergründe, der im Oberbegriff des Patentanspruchs 1 genannten Art.

### Stand der Technik

Ein derartiges Befestigungselement dient der Befestigung in harten Untergründen, wie Beton, Mauerwerk und dergleichen. Das Befestigungselement wird in ein zuvor erstelltes Bohrloch in den Untergrund mittels eines geeigneten Setzwerkzeugs eingeschraubt, wobei das selbstschneidende Gewinde ein komplementäres Gewinde in dem Untergrund beziehungsweise in der Bohrlochwandung erstellt. Das Befestigungselement ist über den erzeugten Hinterschnitt im Untergrund verankert. Das in der Aufnahme vorgesehene Lastangriffsmittel ist beispielsweise ein Innengewinde, in welches zur Erstellung der Befestigung ein Befestigungsmittel, wie eine Gewindestange oder eine Schraube eindrehbar ist. Anstelle eines Innengewindes kann als Lastangriffsmittel auch ein Bajonettverschluss vorgesehen sein.

Aus der WO 01/88387 A1 ist ein gattungsgemässes Befestigungselement mit einem zylinderförmigen Grundkörper bekannt, der sich entlang einer Längsachse erstreckt und der ein erstes, in Setzrichtung des Befestigungselementes liegendes Ende sowie ein zweites, dem ersten Ende abgewandtes Ende aufweist. An dessen Aussenseite ist ein selbstschneidendes Gewinde mit drei wendelförmig umlaufende Schneiden vorgesehen, die an einem Endbereich beim ersten Ende an einem Umfangskreis auslaufen und beim Ansetzen des Befestigungselementes an die erstellte Bohrung im Untergrund eine Dreipunkt-Auflage ausbilden. Der Grundkörper weist ein innenliegendes Angriffsmittel für ein Setzwerkzeug sowie eine zum zweiten Ende offene Aufnahme auf, die sich in Richtung des ersten Endes an das Angriffsmittel anschliesst und mit einem Innengewinde als Lastangriffsmittel versehen ist.

Nachteilig an der bekannten Lösung ist, dass infolge der Anordnung des Angriffsmittels für das Setzwerkzeug am zweiten Ende des Grundkörpers das Befestigungselement beim Setzvorgang eine Tendenz zum Verkippen aufweist. Dadurch wird der Setzvorgang erschwert und der Bohrlochmund in unerwünschter Art und Weise aufgeweitet.

Aus der EP 1 536 149 A2 ist ein gattungsgemässes Befestigungselement bekannt, das einen zylinderförmigen Grundkörper umfasst, der sich entlang einer Längsachse erstreckt und der ein erstes, in Setzrichtung des Befestigungselementes liegendes Ende sowie ein zweites, dem ersten Ende abgewandtes Ende aufweist. An der Aussenseite des Grundkörpers ist ein selbstschneidendes Gewinde vorgesehen, wobei ein Auslauf des selbstschneidenden Gewindes zur Schaffung eines gewindefreien Abschnitts an der Aussenseite des Grundkörpers, der sich vom ersten Ende in Richtung des zweiten Endes erstreckt, beabstandet zu dem ersten Ende angeordnet ist. Der Grundkörper weist ein innenliegendes Angriffsmittel für ein Setzwerkzeug sowie eine zum zweiten Ende offene Aufnahme auf, die sich in Richtung des zweiten Endes an das Angriffsmittel anschliesst und mit einem Lastangriffsmittel versehen ist. Das Angriffsmittel ist in einem Endbereich des ersten Endes auf gleicher axialer Höhe des Grundkörpers wie der Auslauf des selbstschneidenden Gewindes angeordnet.

Nachteilig an der bekannten Lösung ist, dass auch dieses Befestigungselement eine leichte Tendenz zum Verkippen aufweisen kann sowie die Fertigung eines solchen Befestigungselementes aufwändig und somit kostenintensiv ist. Zudem sind die Fertigungsmöglichkeiten bei einem solchen Befestigungselement stark eingeschränkt. Gerade bei einem Massenprodukt, das ein solches Befestigungselement darstellt, ist die wirtschaftliche Fertigung ein wesentlicher Wettbewerbsvorteil.

### Darstellung der Erfindung

Aufgabe der Erfindung ist es, ein Befestigungselement für harte Untergründe zu schaffen, bei dem die Tendenz zum Verkippen beim Setzvorgang weitgehend eliminiert und das wirtschaftlich zu fertigen ist.

Die Aufgabe ist durch die Merkmale des unabhängigen Anspruchs gelöst. Vorteilhafte Weiterbildungen sind in den Unteransprüchen dargelegt.

Gemäss der Erfindung weist der gewindefreie Abschnitt eine axiale Erstreckung auf, die grösser als die axiale Erstreckung des innenliegenden Angriffsmittel ist, wobei das innenliegende Angriffsmittel im Bereich des gewindefreien Abschnitts angeordnet ist.

Der gewindefreie Abschnitt des erfindungsgemässen Befestigungselementes richtet dieses beim Einführen desselben in das zuvor erstellte Bohrloch aus und zentriert das Befestigungselement im Bohrloch entgegen der durch das Einschneiden des Gewindeanschnitts in der Bohrlochwandung entstehenden radialen, auf das Befestigungselement wirkenden Kräfte, welche das Befestigungselement auszulenken versuchen und dadurch ein unerwünschtes Taumeln verursachen würden. Durch die Anordnung des innenliegende Angriffsmittels im Bereich des gewindefreien Abschnitts wird das von dem Setzwerkzeug erzeugte Drehmoment entfernt von dem Bohrlochmund und von dem Gewindeanschnitt in das Befestigungselement eingebracht, womit eine Tendenz zum Verkippen zusätzlich unterbunden beziehungsweise reduziert wird.

Des Weiteren generiert der gewindefreie Abschnitt eine zusätzliche Einspannmöglichkeit am Umfang des Grundkörpers zur Fertigung des erfindungsgemässen Befestigungselementes. Dadurch lässt sich ein bereits gefertigtes Antriebsmittel für das Setzwerkzeug bei der Fertigung des selbstschneidenden Aussengewindes vor Deformationen schützen. Die Anzahl von Fertigungsmöglichkeiten wird dadurch wesentlich erhöht und die Umsetzung von Weiterentwicklungen in den Fertigungsmethoden ermöglicht, was in einer wirtschaftlicheren und somit kostengünstigeren Fertigung des Befestigungselementes resultiert.

Das Lastangriffsmittel erstreckt sich vorteilhaft vom zweiten Ende des Grundkörpers bis zum Angriffsmittel, so dass der gesamte Abschnitt zur Übertragung von Lasten über das Befestigungsmittel zur Verfügung steht. In einer Variante erstreckt sich das Lastangriffsmittel für das Befestigungsmittel in der Aufnahme in einem Abstand zu dem Angriffsmittel und/oder zu dem zweiten Ende.

Vorzugsweise entspricht die axiale Erstreckung des gewindefreien Abschnitts zumindest dem 0.5-fachen des Kerndurchmessers des Grundkörpers, womit eine ausreichende Führung und Zentrierung des erfindungsgemässen Befestigungselementes beim Einführen beziehungsweise beim Setzen desselben gewährleistet ist. Zudem wird mit dieser Ausgestaltung des erfindungsgemässen Befestigungselementes eine ausreichende Umfangsfläche zum Spannen des Befestigungselementes bei dessen Fertigung zur Verfügung gestellt. Unter Kerndurchmesser des Grundkörpers wird in diesem Zusammenhang der Aussendurchmesser des zylinderförmigen Grundkörpers ohne das selbstschneidende Gewinde bzw. der Durchmesser am Gewindegrund gemessen verstanden.

Bevorzugt weist der gewindefreie Abschnitt zumindest bereichsweise eine konische Ausgestaltung auf. Mit der konischen Aussengeometrie wird das Einführen und somit das Setzen des erfindungsgemässen Befestigungselementes erleichtert.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand eines Ausführungsbeispieles näher erläutert. Es zeigen:
Fig. 1 Einen Schnitt durch ein erfindungsgemässes Befestigungselement zu Beginn des Setzvorgangs; und
Fig. 2 eine Seitenansicht auf das erfindungsgemässe Befestigungselement.

Grundsätzlich sind in den Figuren gleiche Teile mit den gleichen Bezugszeichen versehen.

### Wege zur Ausführung der Erfindung

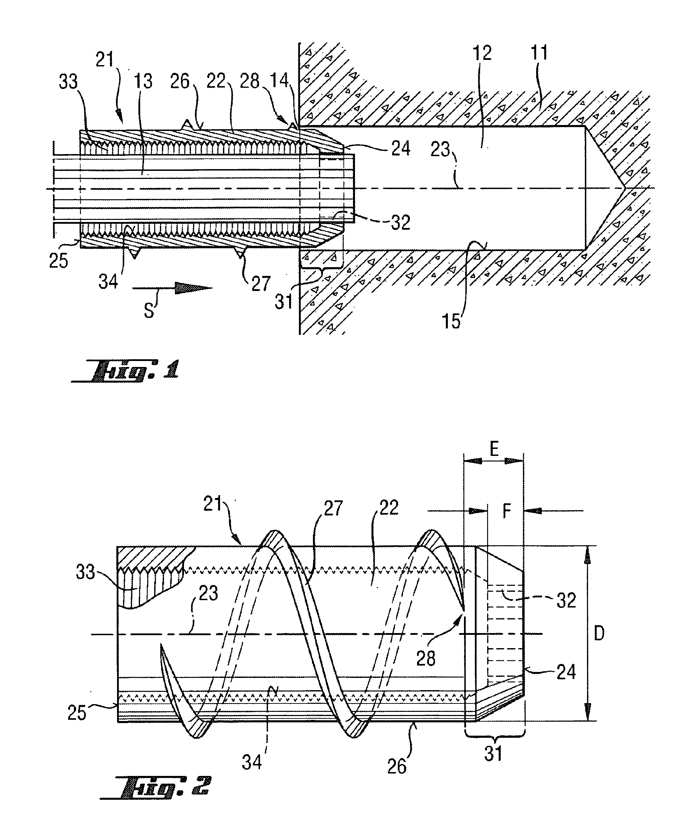

Das in den Figuren 1 und 2 dargestellte Befestigungselement 21 für harte Untergründe 11 umfasst einen zylindrischen Grundkörper 22, der sich entlang einer Längsachse 23 erstreckt und der ein erstes, in Setzrichtung S liegendes Ende 24 sowie ein zweites, dem ersten Ende 24 abgewandtes Ende 25 aufweist. An der Aussenseite 26 des Grundkörpers 22 ist ein selbstschneidendes Gewinde 27 vorgesehen, dessen Auslauf 28 zur Schaffung eines gewindefreien Abschnitts 31 beabstandet zu dem ersten Ende 24 angeordnet ist, wodurch sich der gewindefreie Abschnitt 31 vom ersten Ende 24 in Richtung des zweiten Endes 25 erstreckt. Der Grundkörper weist weiter ein innenliegendes Angriffsmittel 32 für ein Setzwerkzeug 13 sowie eine zum zweiten Ende 25 offen ausgebildete Aufnahme 33 auf, die sich in Richtung des zweiten Endes 25 an das innenliegende Angriffsmittel 32 anschliesst und mit einem Innengewinde als Lastangriffsmittel 34 versehen ist.

Der gewindefreie Abschnitt 31 weist eine axiale Erstreckung E auf, die grösser als die axiale Erstreckung F des innenliegenden Angriffsmittels 32 ist. Das innenliegende Angriffsmittel 32 ist im Bereich des gewindefreien Abschnitts 31 angeordnet. Die axiale Erstreckung E des gewindefreien Abschnitts 31 entspricht dem 0.7-fachen des Kerndurchmessers D des Grundkörpers 22. Der gewindefreie Abschnitt 31 weist bereichsweise eine konische Ausgestaltung auf.

Zum Setzen des Befestigungselementes 21 wird zuvor ein Bohrloch 12 in dem harten Untergrund 11 - hier z. B. in ein Betonbauteil - erstellt und das Befestigungselement 21 in dieses eingeführt, bis der Auslauf 28 des selbstschneidenden Gewindes 27 mit dem Bohrlochmund 14 in Anlage kommt. Mit einem geeigneten Setzwerkzeug 13, das über das Angriffsmittel 32 ein Drehmoment auf das Befestigungselement 21 überträgt, wird das Befestigungselement 21 in das Bohrloch 12 eingedreht, wobei das selbstschneidende Gewinde 27 ein komplementäres Gewinde in der Bohrlochwandung 15 zur Erzeugung eines Hinterschnitts erstellt.

## Patentansprüche

1. Befestigungselement für harte Untergründe (11), wie Beton, Mauerwerk und dergleichen, mit einem zylinderförmigen Grundkörper (22), der sich entlang einer Längsachse (23) erstreckt und der ein erstes Ende (24) sowie ein zweites, dem ersten Ende (24) abgewandtes Ende (25) aufweist und an dessen Aussenseite (26) zumindest teilweise ein selbstschneidendes Gewinde (27) vorgesehen ist, wobei ein Auslauf (28) des selbstschneidenden Gewindes (27) zur Schaffung eines gewindefreien Abschnitts (31) an der Aussenseite (26) des Grundkörpers (22), der sich vom ersten Ende (24) in Richtung des zweiten Endes (25) erstreckt, beabstandet zu dem ersten Ende (24) angeordnet ist, und wobei der Grundkörper (22) ein innenliegendes Angriffsmittel (32) für ein Setzwerkzeug (13) sowie eine zum zweiten Ende (25) offene Aufnahme (33) aufweist, die sich in Richtung des zweiten Endes (25) an das Angriffsmittel (32) anschliesst und mit einem Lastangriffsmittel (34) versehen ist, **dadurch gekennzeichnet, dass** der gewindefreie Abschnitt (31) eine axiale Erstreckung (E) aufweist, die grösser als die axiale Erstreckung (F) des innenliegenden Angriffsmittels (32) ist, und das innenliegende Angriffsmittel (32) im Bereich des gewindefreien Abschnitts (31) angeordnet ist.

2. Befestigungselement nach Anspruch 1, **dadurch gekennzeichnet, dass** die axiale Erstreckung (E) des gewindefreien Abschnitts (31) zumindest dem 0.5-fachen des Kerndurchmessers (D) des Grundkörpers (22) entspricht.

3. Befestigungselement nach Anspruch 1 oder 2, **dadurch gekennzeichnet, dass** der gewindefreie Abschnitt (31) zumindest bereichsweise eine konische Ausgestaltung aufweist.

## Claims

1. Fastening part for hard substrates (11), such as concrete, masonry and the like, with a cylindrically shaped foundation (22), which extends along a longitudinal axis (23) and which has a first end (24) as well as a second end (25) facing away from the first end (24) and on the outside (26) of which a self tapping thread (27) is provided at least partly, in which a runout (28) of the self tapping thread (27) for creating a section (31) without a thread on the outside (26) of the foundation (22), which extends from the first end (24) in the direction of the second end (25), is arranged at a distance from the first end (24), and in which the foundation (22) has a means of contact (32) on the inside for a setting tool (13) as well as an open mounting (33) at the second end (25), which connects with the means of contact (32) in the direction of the second end (25) and is provided with a load applying means (34), **characterised in that** the section (31) without a thread has an axial extension (E), which is greater than the axial extension (F) of the means of contact (32) on the inside, and the means of contact (32) on the inside is arranged in the area of the section (31) without a thread.

2. Fastening part according to claim 1, **characterised in that** the axial extension (E) of the section (31) without a thread corresponds to at least 0.5 times the core diameter (D) of the foundation (22).

3. Fastening part according to claim 1 or 2, **characterised in that** the section (31) without a thread has a conical shape at least in part.

## Revendications

1. Elément de fixation pour des surfaces sous-jacentes dures (11), telles que du béton, de la maçonnerie et analogue, comportant un corps de base cylindrique (22) qui s'étend le long d'un axe longitudinal (23) et qui comporte une première extrémité (24) et une seconde extrémité (25) opposée à la première extrémité (24), et sur le côté extérieur 26 duquel est prévu au moins partiellement un filetage autotaraudeur (27), dans lequel une fin de filet (28) du filetage autotaraudeur (27) est agencée espacée de la première extrémité (24) pour créer une partie non filetée (31) sur le côté extérieur (26) du corps de base (22) qui s'étend à partir de la première extrémité (24) en direction de la seconde extrémité (25), et dans lequel le corps de base (22) comporte des moyens de prise situés vers l'intérieur (32) pour un outil de pose (13) ainsi qu'un logement (33) ouvert vers la seconde extrémité (25), lequel logement est adjacent aux moyens de prise (32) en direction de la seconde extrémité (25) et est muni de moyens d'application de charge (34), **caractérisé en ce que** la partie non filetée (31) comporte une extension axiale (E) qui est plus grande que l'extension axiale (F) des moyens de prise situés vers l'intérieur (32), et les moyens de prise situés vers l'intérieur (32) sont agencés dans la zone de la partie non filetée (31).

2. Elément de fixation selon la revendication 1, **caractérisé en ce que** l'extension axiale (E) de la partie non filetée (31) correspond au moins à 0,5 fois le diamètre à fond de filet (D) du corps de base (22).

3. Elément de fixation selon la revendication 1 ou 2, **caractérisé en ce que** la partie non filetée (31) a un profil conique, au moins dans certaines zones.
